# EUROPEAN PATENT SPECIFICATION

(11) **EP 2 486 802 B1**
(45) Date of publication and mention of the grant of the patent: **11.09.2013**
(21) Application number: 11425026.9
(22) Date of filing: 09.02.2011
(51) Int. Cl.: A23G 3/00, A23G 3/48, A23G 3/36, A23G 3/42, A23L 1/0524

(54) **Chocolate jelly candy**
Schokoladengeleesüßigkeit
Bonbon gélifié au chocolat

(43) Date of publication of application: 15.08.2012
(73) Proprietor: Fida S.r.l., 20121 Milano (MI) (IT)
(72) Inventor: Occelli, Alessandro, 12037 Saluzzo (CN) (IT)
(74) Representative: Asensio, Raffaella Consuelo

(56) References cited:
- WO-A2-2004/030469
- US-A- 4 241 099
- US-A1- 2003 207 015

## Description

### Field of the invention

The present invention relates to confectionery, in particular to jelly candies and to a process and a gelatinous composition for the preparation thereof.

### Background of the invention

Gelatinous products for use in the confectionery industry are usually obtained by gelatinization of a water suspension of a natural polymer like starch, pectin, gum or gelatin.

Jelly candies are candies characterised by a gel-like consistency that can be prepared from a mixture containing pectin, sugar and glucose syrup, which is heated to a suitable temperature, added with a weak organic acid, such as citric or malic acid, and suitable flavours, then poured into moulds of appropriate shape and size and allowed to gelatinize upon cooling. Gelatinization is promoted by addition of the weak organic acid, which also gives these candies their typical sour taste; however, while a sour taste goes well with fruit-flavours, it does not with other flavours, such as liquorice, mint or chocolate. Liquorice and mint jelly candies have been prepared by using reduced amounts of acids, or by using pectins that gelatinise in the presence of calcium salts, or by using other thickening agents, like carragenin or alginate. However, these jelly candies do not have the desired gel-like consistency, but they are either gummy or too soft or they still have a sour aftertaste. Furthermore, the ingredients and methods used for the preparation of liquorice and mint jelly candies are not suitable for the preparation of chocolate jelly candies, because cocoa butter and other basic substances contained in chocolate make gelatinization difficult and require the use of higher amounts of weak organic acid, which would give a sour taste incompatible with a chocolate or cocoa taste. The preparation of chocolate jelly candies is even more troublesome when fruit flavours or juices are to be added, because such flavours and juices alter the acidity of the mixture and make the obtainment of a non-sour taste more difficult.

There is therefore the need to develop a gelatinous product and a preparation method for the manufacture of non-sour chocolate jelly candies; in particular, there is the need to develop a gelatinous product and a preparation method for the manufacture of fruit-flavoured non-sour chocolate jelly candies.

US 2,441,729 discloses the preparation of a gelatinous product based on 1) a water-soluble alginate, 2) an algin-gelatinizing salt, preferably a calcium salt, 3) a weakly acidic substance, such as delta glucono lactone, and 4) a gel-inhibiting or gel-retarding substance. In particular, example 1 discloses a method for preparing a candy jelly containing sodium alginate, tricalcium phosphate, monosodium phosphate, disodium phosphate, delta glucono lactone, sucrose and water. The purported advantage of the above ingredients and method is that gels having any desired degree of acidity can be obtained. However, this prior art does not disclose or suggest the preparation of jelly candies with particular flavours and does not mention chocolate products; also, this document does not envisage the replacement of the alginate salt with gelatin.

US 2,380,739 discloses the preparation of rapid-setting gels without the use of high amounts of sugars and without heating. The method comprises the treatment of pectin with ammonia to obtain an ammonium pectate, the dissolution of this salt in water and the addition of other ingredients, among them a substance that hydrolyses to yield an organic acid, like delta glucono lactone, and promotes the formation of a homogeneous gel. This document does not address the problem of preparing jelly candies having a particular taste and generically mentions only fruit flavours.

WO 2004/030469 A2 discloses a jelly candy comprising high-methoxy pectin and delta glucono lactone, in ratio of 1:1.

US 4 241 099 A discloses gelling compositions comprising high-methoxylated pectin, a weak organic acid buffer (sodium citrate + malic acid) and GDL, in ratios of 7:1:7.85, 1.71:1:2.85 or 3:1:3.

### Disclosure of the invention

It has now been found that jelly candies, in particular chocolate jelly candies, can be prepared using a high-methoxy pectin in admixture with a weak organic acid buffer and delta glucono lactone.

In a first aspect, the invention relates to jelly candies, in particular chocolate jelly candies, containing a high-methoxy pectin, a weak organic acid buffer and delta glucono lactone, in admixture with food ingredients and additives. In a second aspect, the invention relates to a process for the preparation of jelly candies, in particular chocolate jelly candies, from a gelatinous composition containing a high-methoxy pectin, a weak organic acid buffer and delta glucono lactone.

In a third aspect, the invention relates to a gelatinous composition containing a high-methoxy pectin, a weak organic acid buffer and delta glucono lactone for the preparation of jelly candies, in particular chocolate jelly candies.

For the purposes of the present invention, the expression "high-methoxy pectin" identifies a pectin having a degree of esterification with methoxy groups ranging from 50 to 70% with respect to the equivalent weight and a strength of 150° +/- 5° SAG (measured according to the USA SAG method; firmness grade method 5-54. Food Technology, vol. XIII n.9, 1959). An example of this pectin is commercially available from Tate & Lyle.

The expression "weak organic acid buffer" identifies a buffer formed by a weak organic acid and a corresponding inorganic salt thereof which provides a pH of about 4; usually, the weak organic acid is selected from citric acid, malic acid, tartaric acid and lactic acid. According to a preferred embodiment, the weak organic acid buffer is the citric acid buffer, wherein the citrate salt is the tripotassium salt. The weight ratio between the weak organic acid and the corresponding salt may range from 1:2 to 2:1, the ratio of 1:1 being preferred. The term "chocolate" comprises either white or brown chocolate, dark or milk chocolate; this term is also meant to comprise cocoa powder. According to a preferred embodiment, for the preparation of chocolate jelly candies, low-fat alkalized cocoa powder with a fat content ranging from 10 to 12% (with respect to the dry weight of the powder) is used.

The expression "further food ingredients and additives" comprises food ingredients and additives conventionally used in the preparation of confectionery, such as sugars, sweeteners, flavours and colours. Example of suitable sugars are saccharose, fructose, dextrose, inverted sugar, maltodextrins, lactose, fruit sugars, for example grape sugar, optionally concentrated fruit juices, glucose syrup and mixtures thereof. Examples of sweeteners are polyalcohols, such as xylitol, maltitol, lactilol, erythritol and sorbitol, soluble fibres, such as oligofructose, polydextrose, inulin and mixtures thereof. Examples of flavours are fruit flavours, such as lemon, orange, apricot, peach, apple, pear, banana, strawberry, cherry, coconut, red fruits (raspberry, blackberry, blueberry, black or red currant and cranberry), tropical fruits (mango, passion fruit, ananas, guava, papaya, kiwi, maracuja, lime, star fruit, avocado, litchi) and mixtures thereof. These flavours may be either of synthetic or of natural origin and may be either in the solid or in the liquid form. Fruit flavours of natural origin in the liquid form comprise fruit juices, which may be used in the concentrated form; concentrated fruit juices give a fruity and sweet taste, thereby allowing to replace part of the sugar/sweetener in the candies.

The jelly candies of the invention may also be coated with one ore more above-mentioned sugars and/or sweeteners, chocolate, coating agents and mixtures thereof; typical coating agents are carnauba wax and beeswax.

In the jelly candies of the invention, the weight ratio between high-methoxy pectin, citric acid buffer and delta glucono lactone is 4-5 : 1 : 1-2. In the chocolate jelly candies of the invention, the weight ratio between chocolate and the mixture of high-methoxy pectin, citric acid buffer and delta glucono lactone ranges from 0.80 to 0.95.

The jelly candies of the invention can be prepared by means of a process that comprises:
a) providing a gelatinous composition comprising high-methoxy pectin, citric acid buffer and delta glucono lactone in weight ratio of 4-5 : 1 : 1-2;
b) adding food ingredients and additives to the gelatinous composition;
c) pouring the gelatinous composition into suitable moulds and
d) drying the gelatinous composition.

Accordingly, the present invention relates also to a gelatinous composition comprising high-methoxy pectin, citric acid buffer and delta glucono lactone in weight ratio of 4-5 : 1 : 1-2 for the preparation of jelly candies, in particular for the preparation of chocolate jelly candies.

For the purposes of the present invention, the expression "gelatinous composition" identifies a gel-like aqueous composition comprising high-methoxy pectin, citric acid buffer and delta glucono lactone in weight ratio of 4-5 : 1 : 1-2, with or without food ingredients and additives and in which the gelatinization process has not yet started or is not yet completed.

In the gelatinous composition, the weight percentage of high-methoxy pectin, citric acid buffer and delta glucono lactone ranges from 2 to 2.5 with respect to the total weight of the composition; more preferably, the weight percentage of pectine is 1.4, the weight percentage of citric acid buffer is 0.3 and the weight percentage of delta glucono lactone is 0.5.

In the preparation of chocolate jelly candies, chocolate amounts to from 1 to 3% by weight with respect to the gelatinous composition; preferably, chocolate amounts to 2% by weight.

The amounts of further ingredients and additives will be easily adjusted by a person skilled in the art of confectionery, according to the desired taste of the final product; however, the sugar/sweetener or sugar/sweetener mixture usually amounts to from 75 to 80% by weight and the fruit flavour or fruit flavour mixture usually amounts to from 0.03% to 0.06% by weight with respect to the gelatinous composition.

In particular, chocolate jelly candies according to the present invention can be prepared by shaping and drying a chocolate-containing gelatinous composition, according to a process that comprises the following steps:
a) adding a high-methoxy pectin, a sugar or a sugar mixture and a weak organic acid buffer to water at a temperature of from about 75 to about 85 °C until a homogeneous dispersion is obtained;
b) adding chocolate to glucose syrup at a temperature of from about 55 to about 65 °C and mixing until obtainment of a homogeneous paste;
c) mixing the dispersion obtained in step a) with the paste obtained in step b), adding a further amount of sugar or sugar mixture and cooking the mixture at 110°C for a time ranging from 8 to 12 minutes until a homogeneous dispersion is obtained;
d) adding delta glucono lactone and any other food ingredients and additives to the dispersion of step c) and mixing until obtainment of a homogeneous chocolate gelatinous composition;
e) pouring the chocolate gelatinous composition obtained in step d) into suitable moulds and drying at a temperature ranging from 30 to 45°C until a water content ranging from 14 to 16 % by weight is obtained.

At the end of the process, the candies are removed from the moulds and optionally covered with a sugar, a sweeteners, chocolate, coating agents or mixtures thereof.

Usually, in high-scale production, for the preparation of jelly candies of different flavours, aliquots of the chocolate gelatinous composition of step c) are taken out and steps d) and e) are carried out on each aliquot with the desired flavours, food ingredients and additives.

With regard to the amounts of the ingredients, according to a preferred embodiment, in step a) the high-methoxy pectin is added to water in an amount of about 6.5% by weight, the weak organic acid buffer is added in an amount of about 1.5% by weight and the sugar or sugar mixture is added in an amount of about 22% by weight.

In step b), chocolate is preferably added to warm glucose syrup in an amount of about 5.5% by weight with respect to glucose syrup.

In step c), the sugar or sugar mixture is preferably added in an amount of about 115% by weight with respect to the paste of step b).

In step d), delta glucono lactone is preferably added in an amount of 0.5% by weight with respect to the homogeneous dispersion of step c).

The process of the invention can be carried out with equipments and methods conventionally used in the confectionery industry. For example, mixing and cooking operations can be carried out in double bottom mixing tanks with helical stirrers and in jelly cooking machines; the moulds used in step e) can be any moulds suitable for the preparation of confectionery; according to a preferred embodiment, the moulds are starch moulds.

With respect to other chocolate jelly candies, those of the present invention have an optimal consistency, i.e. they are neither too gummy or too soft and they do not have a sour aftertaste; therefore, the chocolate taste can be fully appreciated. In particular, no sour aftertaste is perceived when the candies contain fruit flavours.

The invention is illustrated in greater detail in the following section in the form of non-limiting examples.

### EXAMPLES

### Materials and methods

High-methoxy pectin with 150° +/- 5° SAG was purchased from Tate & Lyle. Cocoa powder was purchased from Barry Callebaut.

Flavours and fruit juices were purchased from G. Mariani.

Mixing and cooking operations were carried out in Carle & Montanari double-bottom mixers with helical stirrers and in a Jellystar (Klockner) continuous cooking equipment.

Drying was carried out in a Catelli drying oven.

### Example 1. Cherry-cocoa jelly candy

2.9 Kg pectin, 10 kg saccharose, 0.3 kg citric acid and 0.3 kg tripotassium citrate were added to 45 liters water at a temperature of 80 °C and mixed until obtainment of a homogeneous dispersion. 72 kg glucose syrup was warmed up to 60 °C and added with 3.78 kg cocoa powder, then mixed until obtainment of a homogeneous cocoa paste.

The pectin, sugar and citric acid/tripotassium citrate dispersion was transferred into a pre-cooking tank, added with the cocoa paste and 87 kg saccharose, then transferred into a Jellystar cooking equipment and cooked at 110°C for 10 minutes. After cooking, an 80 kg aliquot was taken out and added with 30 grams cherry flavour, 800 grams sour cherry juice, 414 grams delta glucono lactone. After completion of the addition, the mixture was poured into starch moulds and dried into an oven at 45 °C for 24 hours. After this time the candies were taken out of the moulds and covered with crystal sugar (saccharose).

### Example 2. Apricot-cocoa jelly candy

Apricot-cocoa jelly candies were prepared following the procedure of example 1, using 2.8 kg instead of 2.9 kg pectin, 40 grams apricot flavour, 130 grams lemon juice instead of cherry flavour and cherry juice.

### Example 3. Orange-cocoa jelly candy

Orange-cocoa jelly candies were prepared following the procedure of example 1, using 400 grams instead of 300 grams tripotassium citrate, 30 grams orange flavour, 130 grams lemon juice instead of cherry flavour and cherry juice.

### Example 4. Pear-cocoa jelly candy

Pear-cocoa jelly candies were prepared following the procedure of example 1, using 420 grams instead of 414 grams delta glucono lactone, 20 grams pear flavour, 130 grams lemon juice instead of cherry flavour and cherry juice.

### Example 5. Strawberry-cocoa jelly candies

Strawberry-cocoa jelly candies were prepared following the procedure of example 1, using 4.0 kg instead of 3.780 kg cocoa powder, 25 grams strawberry flavour, 130 grams lemon juice instead of cherry flavour and cherry juice.

## Claims

1. A jelly candy containing a high-methoxy pectin, a weak organic acid buffer and delta glucono lactone in a weight ratio of 4-5 : 1 : 1-2 in admixture with food ingredients and additives.

2. The jelly candy according to claim 1 wherein the high-methoxy pectin is a pectin having a degree of esterification with methoxy groups ranging from 50 to 70% and a strength of 150° +/- 5° SAG.

3. The jelly candy according to claim 1 or 2 wherein the weak organic acid buffer is the citric acid buffer.

4. The jelly candy according to claim 3 wherein the citric acid buffer is a citric acid/tripotassium citrate buffer.

5. The jelly candy according to any one of claims 1) to 3) further containing chocolate in a weight ratio of 0.80 to 0.95 with respect to the mixture of high-methoxy pectin, citric acid buffer and delta glucono lactone.

6. The jelly candy according to any one of claims 1) to 5) wherein the food ingredients and additives comprise fruit juices and/or fruit flavours.

7. A process for the preparation of chocolate jelly candies comprising the following steps:
a) adding a high-methoxy pectin, a sugar or a sugar mixture and a weak organic acid buffer to water at a temperature of from 75 to 85 °C until a homogeneous dispersion is obtained;
b) adding chocolate to glucose syrup at a temperature of from 55 to 65 °C and mixing until obtainment of a homogeneous paste;
c) mixing the dispersion obtained in step a) with the paste obtained in step b), adding a further amount of sugar or sugar mixture and cooking the mixture at 110°C for a time ranging from 8 to 12 minutes until a homogeneous dispersion is obtained;
d) adding delta glucono lactone and any other food ingredients and additives to the dispersion of step c) and mixing until obtainment of a homogeneous chocolate gelatinous composition;
e) pouring the chocolate gelatinous composition obtained in step d) into suitable moulds and drying at a temperature ranging from 30 to 45 °C until a water content ranging from 14 to 16 % by weight is obtained.

8. The process according to claim 7) wherein the high-methoxy pectin is a pectin having a degree of esterification with methoxy groups ranging from 50 to 70% and a strength of 150° +/- 5° SAG, and the pectin is added to water in an amount of 6.5% by weight.

9. The process according to claim 8) wherein the weak organic acid buffer is added to water in an amount of 1.5% by weight.

10. The process according to claim 7) or 8) wherein the weak organic acid buffer is the citric acid buffer.

11. The process according to any one of claims 7) to 10) wherein chocolate is added to glucose syrup in an amount of 5.5% by weight.

12. The process according to any one of claims 7) to 11) wherein delta glucono lactone is added in an amount of 0.5% by weight with respect to the homogeneous dispersion of step c).

13. A process according to any one of claims 7) to 12) wherein the food ingredients and additives comprise fruit juices and/or fruit flavours.

14. Chocolate jelly candies obtainable through a process according to any one of claims 7) to 12).

15. A gelatinous composition containing a high-methoxy pectin, a weak organic acid buffer and delta glucono lactone in a weight ratio of 4-5 : 1 : 1-2.

## Patentansprüche

1. Geleebonbon enthaltend ein Hochmethoxypectin, einen Puffer aus schwacher organischer Säure und Delta-Gluconlacton in einem Gewichtsverhältnis von 4-5 : 1 : 1-2 in einer Mischung mit Nahrungsmittelbestandteilen und Zusatzmitteln.

2. Geleebonbon nach Anspruch 1, wobei das Hochmethoxypectin ein Pectin ist, das einen Veresterungsgrad mit Methoxygruppen im Bereich von 50 bis 70 % und eine Festigkeit von 150° +/- 5° SAG (belastungsinduzierte Ausrichtung) aufweist.

3. Geleebonbon nach Anspruch 1 oder 2, wobei der Puffer aus schwacher organischer Säure Zitronensäurepuffer ist.

4. Geleebonbon nach Anspruch 3, wobei der Zitronensäurepuffer ein Zitronensäure-/Trikaliumcitrat-Puffer ist.

5. Geleebonbon nach einem der Ansprüche 1 bis 3, des Weiteren Schokolade in einem Gewichtsverhältnis von 0,80 bis 0,95, mit Bezug auf die Mischung von Hochmethoxypectin, Zitronensäurepuffer und Delta-Gluconlacton enthaltend.

6. Geleebonbon nach einem der Ansprüche 1 bis 5, wobei die Nahrungsmittelbestandteile und Zusatzmittel Obstsäfte und/oder Obstgeschmackstoffe umfassen.

7. Verfahren zur Herstellung von Schokoladegeleebonbons, umfassend die folgenden Schritte:
a) Hinzusetzen von Hochmethoxypectin, einem Zucker oder einer Zuckermischung und einem Puffer aus schwacher organischer Säure bei einer Temperatur von 75 bis 85 °C, bis eine homogene Dispersion erhalten wird;
b) Hinzusetzen von Schokolade zu Glucosesirup bei einer Temperatur von 55 bis 65 °C und Mischen, bis zum Erhalten einer homogenen Paste;
c) Mischen der in Schritt a) erhaltenen Dispersion mit der in Schritt b) erhaltenen Paste, Hinzusetzen einer weiteren Menge Zucker oder Zuckermischung und Kochen der Mischung bei 110 °C für eine Zeitspanne im Bereich von 8 bis 12 Minuten, bis eine homogene Dispersion erhalten wird;
d) Zusetzen von Delta-Gluconlacton und irgendwelcher anderer Nahrungsmittelbestandteile und Zusatzmittel zu der Dispersion aus Schritt c) und Mischen bis zum Erhalten einer homogenen gelatineartigen Schokoladezusammensetzung;
e) Gießen der in Schritt d) erhaltenen gelatineartigen Schokoladezusammensetzung in geeignete Formen und Trocknen bei einer Temperatur im Bereich von 30 bis 45 °C, bis ein Wassergehalt im Bereich von 14 bis 16 Gew.-% erhalten wird.

8. Verfahren nach Anspruch 7, wobei das Hochmethoxypectin ein Pectin ist, das einen Veresterungsgrad mit Methoxygruppen im Bereich von 50 bis 70 % und eine Festigkeit von 150° +/- 5° SAG aufweist, und das Pectin Wasser in einer Menge von 6,5 Gew.-% zugegeben wird.

9. Verfahren nach Anspruch 8, wobei der Puffer aus schwacher organischer Säure Wasser in einer Menge von 1,5 Gew.-% zugegeben wird.

10. Verfahren nach Anspruch 7 oder 8, wobei der Puffer aus schwacher organischer Säure der Zitronensäurepuffer ist.

11. Verfahren nach einem der Ansprüche 7 bis 10, wobei Schokolade Glucosesirup in einer Menge von 5,5 Gew.-% zugegeben wird.

12. Verfahren nach einem der Ansprüche 7 bis 11, wobei Delta-Gluconlacton in einer Menge von 0,5 Gew.-%, mit Bezug auf die homogene Dispersion von Schritt c) zugegeben wird.

13. Verfahren nach einem der Ansprüche 7 bis 12, wobei die Nahrungsmittelbestandteile und Zusatzmittel Obstsäfte und/oder Obstgeschmackstoffe3 umfassen.

14. Schokoladegeleebonbons erhältlich durch ein Verfahren nach einem der Ansprüche 7 bis 12.

15. Gelatineartige Zusammensetzung enthaltend ein Hochmethoxypectin, einen Puffer aus schwacher organischer Säure und Delta-Gluconlacton in einem Gewichtsverhältnis von 4-5 : 1 : 1-2.

## Revendications

1. Bonbon gélifié contenant une pectine riche en méthoxy, un tampon d'acide organique faible et de la delta-gluconolactone selon un rapport en poids de 4 à 5 : 1 : 1 à 2 en mélange avec des ingrédients alimentaires et des additifs.

2. Bonbon gélifié selon la revendication 1, dans lequel la pectine riche en méthoxy est une pectine ayant un degré d'estérification avec des groupes méthoxy allant de 50 à 70 % et une force de 150° +/- 5° SAG.

3. Bonbon gélifié selon la revendication 1 ou 2, dans lequel le tampon d'acide organique faible est le tampon d'acide citrique.

4. Bonbon gélifié selon la revendication 3, dans lequel le tampon d'acide citrique est un tampon d'acide citrique/citrate de tripotassium.

5. Bonbon gélifié selon l'une quelconque des revendications 1 à 3, contenant en outre du chocolat selon un rapport en poids de 0,80 à 0,95 par rapport au mélange de pectine riche en méthoxy, tampon d'acide citrique et delta-gluconolactone.

6. Bonbon gélifié selon l'une quelconque des revendications 1 à 5, dans lequel les ingrédients alimentaires et les additifs comprennent les jus de fruit et/ou les arômes de fruit.

7. Procédé de préparation de bonbons gélifiés au chocolat comprenant les étapes suivantes consistant à :
a) ajouter une pectine riche en méthoxy, un sucre ou un mélange de sucres et un tampon d'acide organique faible à de l'eau à une température de 75 à 85 °C jusqu'à l'obtention d'une dispersion homogène ;
b) ajouter du chocolat à un sirop de glucose à une température de 55 à 65 °C et mélanger jusqu'à l'obtention d'une pâte homogène ;
c) mélanger la dispersion obtenue dans l'étape a) avec la pâte obtenue dans l'étape b), ajouter une autre quantité de sucre ou d'un mélange de sucres et cuire le mélange à 110 °C pendant une durée comprise dans la plage allant de 8 à 12 minutes jusqu'à l'obtention d'une dispersion homogène ;
d) ajouter de la delta-gluconolactone et tous autres ingrédients alimentaires et additifs à la dispersion de l'étape c) et mélanger jusqu'à l'obtention d'une composition gélatineuse homogène au chocolat ;
e) verser la composition gélatineuse au chocolat obtenue dans l'étape d) dans des moules appropriés et sécher à une température comprise dans la plage allant de 30 à 45 °C jusqu'à l'obtention d'une teneur en eau de 14 à 16 % en poids.

8. Procédé selon la revendication 7, dans lequel la pectine riche en méthoxy est une pectine ayant un degré d'estérification avec des groupes méthoxy allant de 50 à 70 % et une force de 150° +/- 5° SAG, et la pectine est ajoutée à de l'eau en une quantité de 6,5 % en poids.

9. Procédé selon la revendication 8, dans lequel le tampon d'acide organique faible est ajouté à de l'eau en une quantité de 1,5 % en poids.

10. Procédé selon la revendication 7 ou 8, dans lequel le tampon d'acide organique faible est le tampon d'acide citrique.

11. Procédé selon l'une quelconque des revendications 7 à 10, dans lequel le chocolat est ajouté à un sirop de glucose en une quantité de 5,5 % en poids.

12. Procédé selon l'une quelconque des revendications 7 à 11, dans lequel la delta-gluconolactone est ajoutée en une quantité de 0,5 % en poids par rapport à la dispersion homogène de l'étape c).

13. Procédé selon l'une quelconque des revendications 7 à 12, dans lequel les ingrédients alimentaires et les additifs comprennent les jus de fruit et/ou les arômes de fruit.

14. Bonbons gélifiés au chocolat pouvant être obtenus par un procédé selon l'une quelconque des revendications 7 à 12.

15. Composition gélatineuse contenant une pectine riche en méthoxy, un tampon d'acide organique faible et de la delta-gluconolactone selon un rapport en poids de 4 à 5 : 1 :1 à 2.
